# EUROPEAN PATENT APPLICATION

(11) **EP 3 988 478 A1**
(43) Date of publication of application: **27.04.2022**
(21) Application number: 20830543.3
(22) Date of filing: 22.06.2020
(51) Int. Cl.: B65G 1/137, G06Q 10/08, G06Q 50/28

(54) **AUTOMATIC TRANSPORT DEVICE, AND PICKING INFORMATION ACQUISITION AND DISPLAY METHOD APPLICABLE TO AUTOMATIC TRANSPORT DEVICE IN LOGISTICS SCENARIO**

(30) Priority: 24.06.2019 CN 201910546608
(71) Applicant: Lingdong Technology (Beijing) Co. Ltd, Beijing 100096 (CN)
(72) Inventor: SUI, Liang, Beijing 100096 (CN)
(74) Representative: Vossius & Partner Patentanwälte Rechtsanwälte mbB
(86) International application number: PCT/CN2020/097401
(87) International publication number: WO 2020/259433

(57) **Abstract**

Disclosed is an automatic transport device (100), comprising: a distance sensor for measuring the distance between a surrounding object and the automatic transport device; a movable chassis provided with a power wheel for driving the automatic transport device; a bearing part provided with a space for bearing a container (200); a container sensor (120) for sensing whether the container (200) is associated with the automatic transport device (100); a wireless communication module for transmitting the serial number of the container to a remote server (500) after it is determined that the container (200) is associated with the automatic transport device (100), and receiving picking information that has been fed back; and a display screen (110) for displaying the serial number (410) of the associated container and the picking information (430). Further disclosed is a picking information acquisition and display method. The automatic transport device achieves quick combination and release of picking, container and vehicle information between the automatic transport device and a remote server, various pieces of information are displayed to field workers in time, and the goods carrying efficiency is improved.

## Description

### TECHNICAL FIELD

This disclosure relates to a picking information acquisition method. More specifically, the disclosure relates to a picking information acquisition and display method applicable to logistics warehouses with automatic transport devices.

### BACKGROUND ART

In modern logistics warehouses, in order to reduce the number of on-site manpower and free the hands of on-site workers, many logistics warehouses have started introducing automatic transport devices to assist in the handling of goods.

However, how to automatically acquire picking information intelligently between an automatic transport device and a remote server and display the picking information to on-site workers in time has always been a problem that modern logistics warehouses desire to solve.

For this reason, an intelligent method for acquiring and displaying picking information is urgently needed to be applied to logistics warehouses with automatic transport devices, thereby opening up the links of information circulation and maximizing the efficiency of goods handling in smart warehouses.

### SUMMARY OF THE INVENTION

The object of the disclosure is to provide an automatic transport device and picking information acquisition and display method thereof, and a picking information acquisition method applicable to a logistics warehouse with an automatic transport device.

According to a first aspect of the disclosure, an automatic transport device is provided, wherein the automatic transport device at least comprises: a distance sensor, which is arranged in the vicinity of the automatic transport device for measuring a distance between a surrounding object and the automatic transport device; a movable chassis provided with a plurality of power wheels for driving the automatic transport device; a bearing part arranged above or inside the movable chassis and provided with a space for bearing a container; a container sensor for sensing whether the container is associated with the automatic transport device; a wireless communication module for transmitting a serial number of the container to a remote server after it is determined that the container is associated with the automatic transport device, and receiving picking information fed back by the remote server; and a display screen for displaying the serial number of the container and the picking information after reception of the picking information from the remote server by the wireless communication module.

According to a second aspect of the disclosure, a picking information acquisition method of an automatic transport device is provided, the method at least comprising the following steps: associating a container with the automatic transport device by using a container sensor; transmitting a serial number of the container to a remote server and receiving picking information fed back by the remote server by using a wireless communication module; associating the three of (1) the serial number of the container, (2) the picking information, and (3) a vehicle number of the automatic transport device with one another; and displaying the associated serial number of the container, the picking information, and the vehicle number on a display screen.

According to a third aspect of the disclosure, a picking information acquisition method is provided, which is applicable to a logistics warehouse with an automatic transport device, the method at least comprising the following steps: associating an empty container with the automatic transport device in such a manner that a serial number of the container is associated with a vehicle number of the automatic transport device; displaying the associated serial number of the container and the vehicle number on a display screen of the automatic transport device; the automatic transport device transmitting the vehicle number and the serial number of the container to a remote server, and receiving picking information fed back by the remote server; associating the picking information with the serial number of the container number and with the vehicle number; and displaying the associated serial number of the container, the picking information and the vehicle number on the display screen of the automatic transport device.

The picking information acquisition and display method according to the present disclosure achieves quick combination and release of picking, container and vehicle information between the automatic transport device and the remote server, and is capable of displaying various pieces of information to on-site workers in time, which can thereby open up the links of information circulation in smart logistics warehouses and maximize the efficiency of goods handling in smart logistics scenarios.

### BRIEF DESCRIPTION OF DRAWINGS

The principles, features and advantages of the disclosure can be better understood through the following detailed description of the disclosure with reference to the attached drawings, including:
FIG. 1 shows a schematic diagram of a transport process according to an exemplary embodiment of the disclosure.
FIG. 2 shows a structure and pictures of a display screen according to an exemplary embodiment of the disclosure.
FIG. 3 shows pictures of a series of flows of a display screen according to an exemplary embodiment of the disclosure.
FIG. 4 shows by a flow chart a picking information acquisition method according to an exemplary embodiment of the disclosure.

### DETAILED DESCRIPTION OF EMBODIMENTS

For a clearer understanding of the technical problem to be solved, the technical solutions and the advantageous technical effects of the disclosure, the disclosure will be further explained in greater detail with reference to the attached drawings and several exemplary embodiments. It should be understood that the specific embodiments described herein are only for the purpose of interpreting, rather than limiting the scope of protection of the disclosure. "Associate/association", as mentioned below, refers to the interconnection of particular data (which may be performed by using particular data structures such as linked lists, etc.) in a computer program, and the associated data can be displayed all together on a screen. In this way, the operating user can have an easier understanding of the relations between the data.

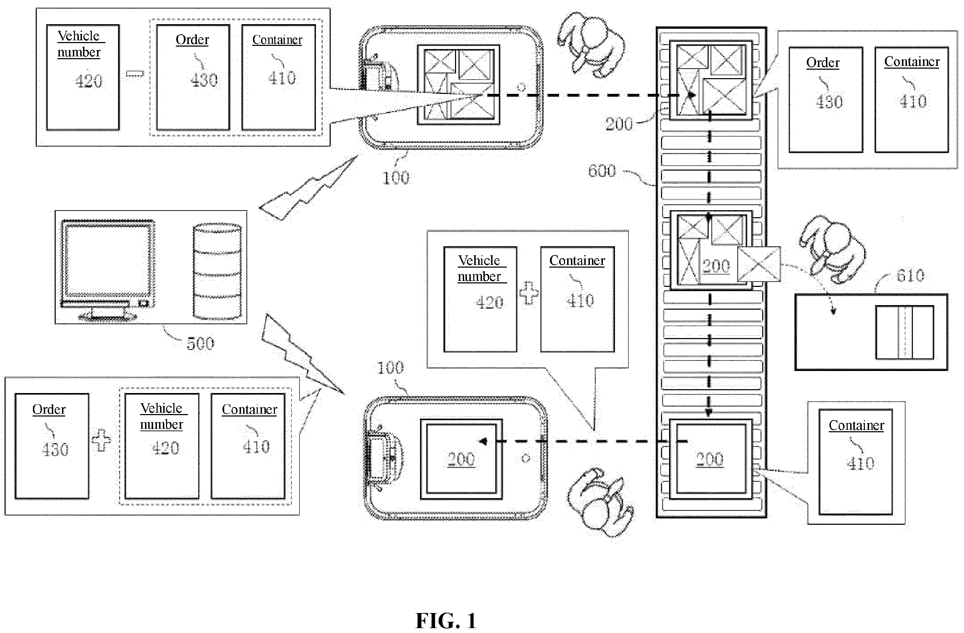

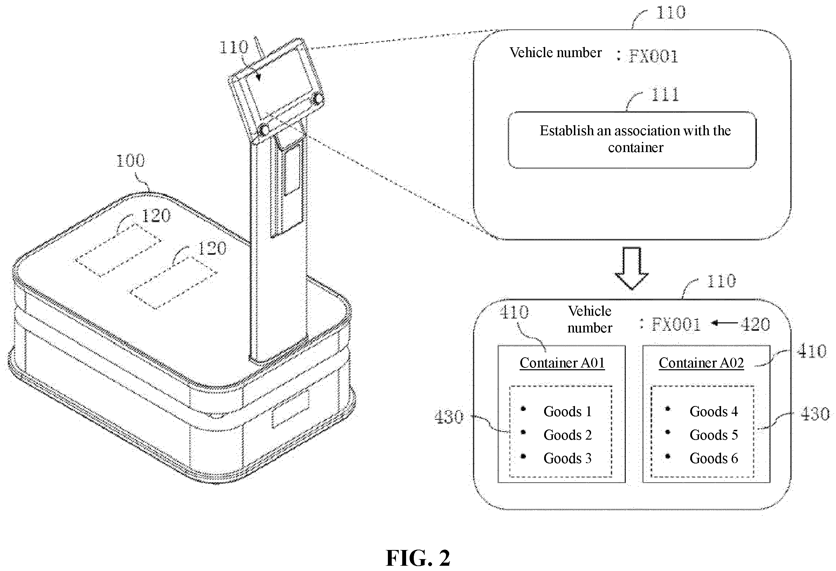

FIG. 1 shows a schematic diagram of a transport process according to an exemplary embodiment of the disclosure. As shown in the lower right of FIG. 1, an automatic transport device 100 first moves autonomously and reaches a locating point A near a conveyor belt 600, and the automatic transport device 100 obtains an empty container 200 from the conveyor belt 600, the way of obtaining may be, as shown in the drawing, manual handling, or mechanical equipment handling (for example, by a conveyor belt or mechanical arm). The container 200 is provided with an identification mark, which may be a two-dimensional code or radio frequency identification (RFID) tag. FIG. 2 shows a structure and pictures of a display screen according to an exemplary embodiment of the disclosure. As shown in FIG. 2, the automatic transport device 100 has a display screen 110 and a container sensor 120; the user initiates a series of associating programs by triggering a first button 111 on the display screen 110, and after all the associating programs are completed, a serial number 410 of the container, a vehicle number 420, and picking information 430 will be simultaneously displayed on the display screen 110. The first button 111 is provided thereon with text for guiding on-site workers, for example, "Establish an association with the container". The container sensor 120 may be a radio frequency identification reading device or two-dimensional code scanning device.

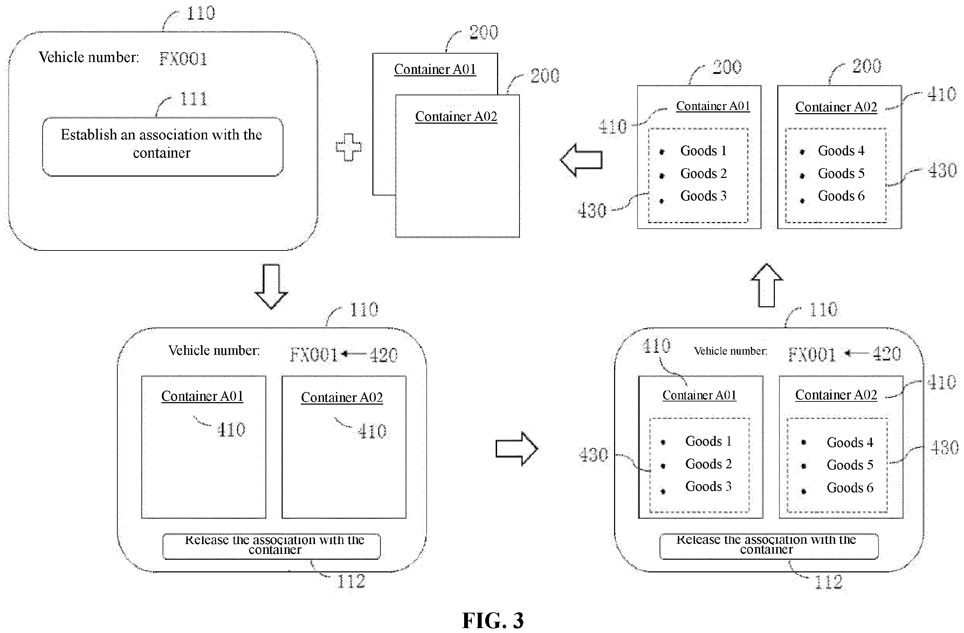

FIG. 3 shows pictures of a series of flows of a display screen according to an exemplary embodiment of the disclosure. As shown from the upper left to the lower left of FIG. 3, when the first button 111 on the display screen 110 is triggered, the container sensor 120 is actuated and is ready to sense the identification mark of the container 200. After sensing the identification mark of the container 200 with the container sensor 120, a processor of the automatic transport device 100 associates the container 200 with the automatic transport device 100, and displays the serial number 410 of the container 200 and the vehicle number 420 of the automatic transport device 100 on the display screen 110. Now please refer to the lower left of FIG. 1 and the lower left of FIG. 3 at the same time. The automatic transport device 100 transmits the vehicle number 420 and the serial number 410 of the container to a remote server 500, and then the automatic transport device 100 receives the picking information 430 fed back from the remote server 500, and associates the picking information 430 with the serial number 410 of the container and with the vehicle number 420, wherein the establishment and release of the associations between the three of the serial number 410 of the container, the vehicle number 420, and the picking information 430 are implemented by the processor of the automatic transport device 100. After the associations are completed, the display screen 110 simultaneously displays the serial number 410 of the container, the vehicle number 420, and the picking information 430 (please refer to the picture of the display screen shown at the lower right of FIG. 3), at which point the on-site workers can quickly understand the connecting relations between the three of the serial number 410 of the container, the vehicle number 420, and the picking information 430 through the display screen 110. Upon association of the serial number 410 of the container, the vehicle number 420, and the picking information 430 with one another, the automatic transport device 100 waits for a departure picking instruction given by the remote server 500, or the departure picking instruction given by the on-site worker via the display screen 110, and after receiving the departure picking instruction, the automatic transport device 100 is actuated from a standstill to go to goods storage areas to pick goods.

Please refer to the upper part of FIG. 1. When the automatic transport device 100 finishes the picking of goods, it moves autonomously and returns to a locating point B near the conveyor belt 600, and waits to handle the loaded container 200 back to the conveyor belt 600, said handling may be manual handling, or mechanical equipment handling (for example, by a conveyor belt or mechanical arm). When the automatic transport device 100 reaches a fixed point near the conveyor belt 600, it turns from an actuated sate to a static state. In the case that the container sensor 120 is a radio frequency identification device, when the container sensor 120 senses a radio frequency identification tag of the container 200 being away from the automatic transport device 100, the processor of the automatic transport device 100 releases the association between the serial number 410 of the container and the vehicle number 420, and meanwhile releases the association between the picking information 430 and the vehicle number 420; after releasing, the display screen 110 no longer displays the serial number 410 of the container and the picking information 430 (e.g., back to the picture of the display screen 110 in the upper left of FIG. 3). In the case that the container sensor 120 is a two-dimensional code scanning device, when the container sensor 120 senses a two-dimensional code of the container 200, the processor of the automatic transport device 100 releases the association between the serial number 410 of the container and the vehicle number 420, and meanwhile releases the association between the picking information 430 and the vehicle number 420; after releasing, the display screen 110 no longer displays the serial number 410 of the container and the picking information 430 (e.g., back to the picture of the display screen 110 in the upper left of FIG. 3). In another embodiment, the on-site worker clicks a second button 112 on the display screen 110, and the processor of the automatic transport device 100 releases the association between the serial number 410 of the container and the vehicle number 420, and meanwhile releases the association between the picking information 430 and the vehicle number 420; after releasing, the display screen 110 no longer displays the serial number 410 of the container and the picking information 430 (e.g., back to the picture of the display screen 110 in the upper left of FIG. 3), wherein the second button 112 is provided thereon with text for guiding on-site workers, for example, "Release the association with the container".

Please refer to the upper right of FIG. 1. When both the serial number 410 of the container and the picking information 430 are released from the association with the vehicle number 420, the container 200 is returned to the conveyor belt 600 for transport, at which point although neither of the serial number 410 of the container and the picking information 430 is associated with the vehicle number 420, the association between the serial number 410 of the container and the picking information 430 still exists, which (please refer to the upper right of FIG. 3) is recorded in the remote server 500. In other words, when the container 200 is just returned to the conveyor belt 600 for transport, although the container 200 has left the automatic transport device 100, the goods are still loaded in the container 200 and, as a result, when the serial number 410 of the container is released from the association with the vehicle number 420, the association between the serial number 410 of the container and the picking information 430 still exists.

Please refer to the right side of FIG. 1. When the container 200 loaded with goods reaches a packaging table 610 through the conveyor belt 600, the on-site worker or mechanical arm picks the goods from the container 200 and uses a handheld sensing device to sense the identification mark of the container 200, and the remote server 500 releases the association between the serial number 410 of the container and the picking information 430 upon completion of the sensing. By this time, the entire process of the picking information acquisition method applicable to logistics warehouses has been completed, and a returning to step one is performed to wait for a new round of process to be restarted.

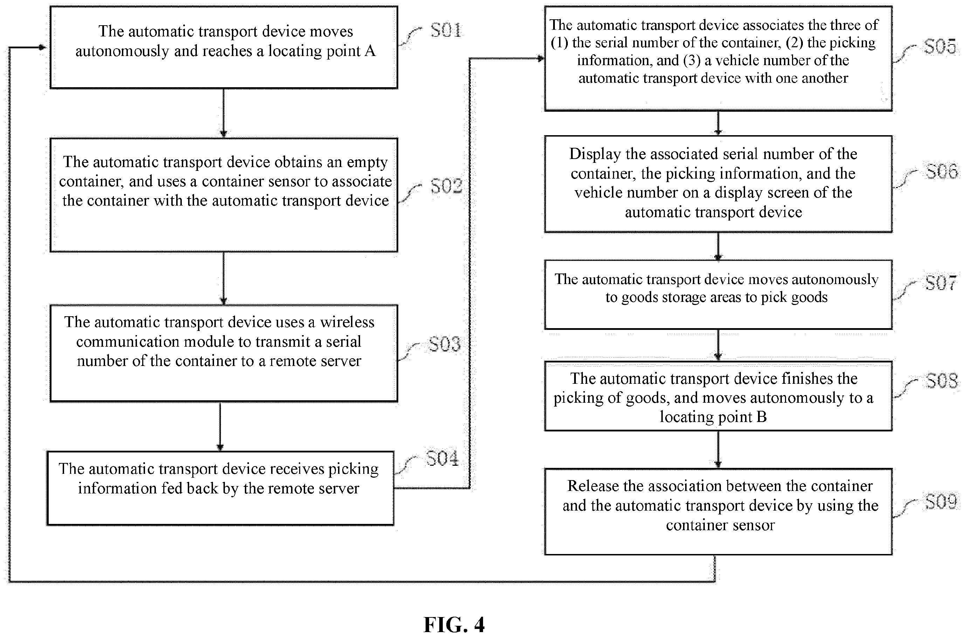

FIG. 4 shows by a flow chart a picking information acquisition method according to an exemplary embodiment of the disclosure, the method comprising the following steps (please refer to FIG. 1 to FIG. 3 for the signs):
Step S01: The automatic transport device 100 moves autonomously and reaches a locating point A. The locating point A is located near the conveyor belt 600, and the automatic transport device 100 by this time does not carry any container 200.
Step S02: The automatic transport device 100 obtains an empty container 200 from the conveyor belt 600, and the way of obtaining may be manual handling, or mechanical equipment handling (for example, by a conveyor belt or mechanical arm). After the automatic transport device 100 obtains the empty container, the on-site worker triggers the first button 111 on the display screen 110, and uses the container sensor 120 to associate the container 200 with the automatic transport device 100. To be more specific, after sensing an identification mark of the container 200 with the container sensor 120, the automatic transport device 100 or the remote server 500 associates the serial number 410 of the container with the vehicle number 420, and the display screen 110 of the automatic transport device 100 simultaneously displays the serial number 410 of the container and the vehicle number 420.
Step S03: The automatic transport device 100 uses a wireless communication module to transmit the serial number 410 of the container 200 to the remote server 500. In one embodiment, the vehicle number 420 is also transmitted to the remote server 500 at the same time. The remote server 500, depending on a capacity corresponding to the serial number 410 of the container, allocates a suitable order corresponding to the serial number 410 of the container, and feeds back picking information 430 containing the order information to the automatic transport device 100.
Step S04: The automatic transport device 100 receives the picking information 430 fed back by the remote server 500.
Step S05: The automatic transport device 100 associates the three of (1) the serial number 410 of the container, (2) the picking information 430, and (3) the vehicle number 420 of the automatic transport device with one another.
Step S06: The automatic transport device 100 displays the associated serial number 410 of the container, the picking information 430, and the vehicle number 420 on the display screen 110 of the automatic transport device 100.
Step S07: The automatic transport device 100 moves autonomously to goods storage areas to pick goods. Upon arrival of the automatic transport device 100 at a target goods storage area, the on-site worker or mechanical arm places the relevant goods into the corresponding container 200 according to the picking information 430 displayed on the display screen 110. At this point, the on-site worker can quickly understand the connecting relations between the three of the serial number 410 of the container, the vehicle number 420, and the picking information 430 through the display screen 110.
Step S08: The automatic transport device 100 finishes the picking of goods, and moves autonomously to a locating point B. The locating point B is located near the conveyor belt 600 but, different from the locating point A, is closer to an upstream position of the conveyor belt than the locating point A, the upstream position referring to the vicinity of a starting point where the transport of the conveyor belt starts, and the automatic transport device 100 by this time carries the container 200 loaded with goods.
Step S09: The on-site worker or mechanical arm uses the container sensor 120 to release the association between the container 200 and the automatic transport device 100. To be more specific, in the case that the container sensor 120 is a radio frequency identification device, when the container sensor 120 senses a radio frequency identification tag of the container 200 being away from the automatic transport device 100, the processor of the automatic transport device 100 releases the association between the serial number 410 of the container and the vehicle number 420, and meanwhile releases the association between the picking information 430 and the vehicle number 420; after releasing, the display screen 110 no longer displays the serial number 410 of the container and the picking information 430 (e.g., back to the picture of the display screen 110 in the upper left of FIG. 3). In the case that the container sensor 120 is a two-dimensional code scanning device, when the container sensor 120 senses a two-dimensional code of the container 200, the processor of the automatic transport device 100 releases the association between the serial number 410 of the container and the vehicle number 420, and meanwhile releases the association between the picking information 430 and the vehicle number 420; after releasing, the display screen 110 no longer displays the serial number 410 of the container and the picking information 430 (e.g., back to the picture of the display screen 110 in the upper left of FIG. 3). In another embodiment, the on-site worker clicks the second button 112 on the display screen 110, and the processor of the automatic transport device 100 releases the association between the serial number 410 of the container and the vehicle number 420, and meanwhile releases the association between the picking information 430 and the vehicle number 420; after releasing, the display screen 110 no longer displays the serial number 410 of the container and the picking information 430 (e.g., back to the picture of the display screen 110 in the upper left of FIG. 3). When all of the containers 200 are removed from the automatic transport device 100 and placed on the conveyor belt 600, the current round of process is complete, and the automatic transport device 100 moves autonomously to the locating point A to get ready for the initiation of the next round of process.

The picking information acquisition and display method of the disclosure achieves quick combination and release of picking, container and vehicle information between the automatic transport device and the remote server, and is capable of displaying various pieces of information to on-site workers in time, which can thereby open up the links of information circulation in smart warehouses and maximize the efficiency of goods handling in smart logistics scenarios.

It should be particularly pointed out that all the above exemplarily described contents and illustrations thereof are applicable to various scenarios provided with an automatic transport device, for example, to a self-driven shopping cart in a supermarket, or a self-driven driverless express vehicle in the city; therefore, the above exemplary description is not limited to logistics warehouse scenarios, and all the contents of the specific embodiments are only as exemplification rather than limitation.

## Claims

1. An automatic transport device, **characterized by**, comprising:
a distance sensor, which is arranged in the vicinity of the automatic transport device for measuring a distance between a surrounding object and the automatic transport device;
a movable chassis provided with a plurality of power wheels for driving the automatic transport device;
a bearing part arranged above or inside the movable chassis and provided with a space for bearing a container;
a container sensor for sensing whether a container is associated with the automatic transport device;
a wireless communication module for transmitting a serial number of the container to a remote server after it is determined that the container is associated with the automatic transport device, and receiving picking information fed back by the remote server; and
a display screen for displaying the serial number of the container and the picking information after reception of the picking information from the remote server by the wireless communication module.

2. The automatic transport device according to claim 1, **characterized in that**, a first button is displayed on the display screen, wherein after the first button is triggered, the container sensor is used for associating the container with the automatic transport device.

3. The automatic transport device according to claim 1, **characterized in that**, a second button is displayed on the display screen, wherein after the second button is triggered, the container sensor is used for releasing an association between the container and the automatic transport device.

4. The automatic transport device according to claim 2, **characterized in that**, the automatic transport device has a vehicle number, and when (1) the first button is triggered, (2) the container is associated by the container sensor with the automatic transport device, and (3) the wireless communication module receives the picking information from the remote server, the display screen displays the vehicle number, the serial number of the container, and the picking information.

5. The automatic transport device according to claim 3, **characterized in that**, when (1) the second button is triggered, and (2) the association between the container and the automatic transport device is released by using the container sensor, the display screen no longer displays the serial number of the container and the picking information.

6. A picking information acquisition method of an automatic transport device, **characterized by**, comprising:
associating a container with the automatic transport device by using a container sensor;
transmitting a serial number of the container to a remote server and receiving picking information fed back by the remote server by using a wireless communication module;
associating the three of (1) the serial number of the container, (2) the picking information, and (3) a vehicle number of the automatic transport device with one another; and
displaying the associated serial number of the container, the picking information, and the vehicle number on a display screen.

7. The picking information acquisition method according to claim 6, **characterized in that**, after releasing of the association between the container and the automatic transport device by using the container sensor, the vehicle number is released from the association with the following two: (1) the serial number of the container, and (2) the picking information.

8. The picking information acquisition method according to claim 6, **characterized in that**, after releasing of the association between the container and the automatic transport device by using the container sensor, the display screen no longer displays the serial number of the container and the picking information.

9. A picking information acquisition method applicable to a logistic warehouse with an automatic transport device, **characterized by**, comprising:
associating an empty container with the automatic transport device in such a manner that a serial number of the container is associated with a vehicle number of the automatic transport device;
displaying the associated serial number of the container and the vehicle number on a display screen of the automatic transport device;
the automatic transport device transmitting the vehicle number and the serial number of the container to a remote server, and receiving picking information fed back by the remote server;
associating the picking information with the serial number of the container and with the vehicle number; and
displaying the associated serial number of the container, the picking information, and the vehicle number on the display screen of the automatic transport device.

10. The picking information acquisition method according to claim 9, **characterized by**, comprising:
for the container loaded with goods, releasing the serial number thereof from the association with the automatic transport device, and after releasing, the display screen no longer displaying the serial number of the container and the picking information.

11. The picking information acquisition method according to claim 10, **characterized by**, comprising:
after goods are removed from the loaded container, releasing the association between the serial number of the container and the picking information.
